# EUROPEAN PATENT SPECIFICATION

(11) **EP 1 927 705 B1**
(45) Date of publication and mention of the grant of the patent: **09.09.2009**
(21) Application number: 07023101.4
(22) Date of filing: 29.11.2007
(51) Int. Cl.: E04F 10/06, A01G 9/22, A01G 9/24

(54) **Awning comprising an intergrated spraying installation**
Markise mit integrierter Sprühanlage
Auvent comprenant une installation de pulvérisation intégrée

(30) Priority: 30.11.2006 NL 1032970
(43) Date of publication of application: 04.06.2008
(73) Proprietor: Alcre (Best) B.V., 5683 CW Best (NL)
(72) Inventor: Van Zutven, Petrus Egbertus Wilhelmus, 5403 PA Uden (NL)
(74) Representative: Dohmen, Johannes Maria Gerardus

(56) References cited:
- DE-U1- 29 913 873
- DE-U1- 29 917 751
- DE-U1-202004 016 294
- US-A- 5 934 349
- US-B1- 6 494 246

## Description

The invention relates to an awning of the type that is to be mounted on or in a facade or a wall of a building or on a vehicle, comprising a frame and sunshade means in the form of a screen which, in mounted condition, is movable with respect to the facade or wall, and spraying means.

Exterior awnings to be mounted on or in a facade or a wall of a building or on a vehicle are generally known per se in the art. Such awnings can essentially be subdivided into the so-called dome awnings, whose sunshade means take the shape of a domed covering in use, awnings of the extension arm or retractable type, which comprise a canvas or a screen which extends in a substantially flat orientation with respect to the facade or wall on which the awning is mounted, and foldable or slidable awnings. Not only the distance over which the canvas or the screen extends from the wall, but also the angle at which the canvas or the screen is oriented with respect to the wall can be varied in some types of awnings.

Awnings are generally mounted above a window, a sliding patio door or the like in a facade or a wall of a building or on a vehicle so as to keep out direct sunlight as much as possible. In particular in the case of retractable awnings that stretch out relatively far and dome awnings, the temperature of the air under the sunshade means can reach unpleasant levels, because heated air remains trapped under the awning, in particular when there is hardly any wind or no wind at all. As a result, staying under such an awning may not be very pleasant, for example on days with a lot of sunshine.

This is disadvantageous in particular in the case of catering establishments, which have created an outdoor café with seating under the awning, where people can consume food products or beverages in the shade. The same drawback applies also to patios of private houses or other places screened by such an awning.

In addition to a temperature increase of the air, dust particles, pollen and other particles suspended in the air may accumulate under the awning, not least insects and the like. For people who suffer from hay fever, for example, staying under an awning may be far from pleasant in such a situation.

German utility model application DE 299 13 873 discloses an awning of the type mentioned in the preamble, wherein beneath the canvas or screen dispensers are mounted, inter alia comprising liquid for moisturing the air in the space under the canvas or screen. The dispensers in the form of containers of limited volume, are visible from the space beneath the screen or canvas and need to be separately mounted to the frame of the awning.

It is an object of the invention to improve the prior art awning such that staying under the awning is made pleasant, also on days with a lot of sunshine and high temperatures, and improving the use and mounting of such an awning.

In order to accomplish that object, the invention provides an awning of the type that is to be mounted on or in a facade or a wall of a building or on a vehicle, comprising a frame having at least one elongated frame part and a sunshade means in the form of a screen that, when in a mounted condition, is movable with respect to the facade or wall, and spraying means, **characterized in that** the spraying means comprise a plurality of nozzles, the at least one elongated frame part comprises a channel for supplying liquid to the nozzles, wherein the nozzles are disposed in the at least one elongated frame part and terminate in the channel for spraying the liquid from the frame.

Although spraying or misting installations for cooling purposes are known per se in practice, the invention is based on the perception that integrating such a spraying or misting installation in the frame of an awning yields significant advantages.

In the first place, the awning according to the invention obviates the need to install separate dispensers, modules, containers or pipes provided with nozzles on the frame and/or the facade or the wall for dispersing the spray. In this way a significant reduction of the total installation costs for the awning and the spraying installation according to the invention is directly realised, because both the awning and the spraying installation can be installed at the same time in one operation.

In the second place, the whole can be given a desired aesthetic appearance or a desired shape and be adapted to specific standardised dimensions of windows, patios, etc., if desired.

In an embodiment of the awning according to the invention, the spraying installation comprises at least one nozzle mounted in at least one part of the frame for dispersing the spray mainly under the screen of the awning. Nozzles suitable for this purpose are known per se in practice and require no further explanation.

In another embodiment of the awning according to the invention, in which the frame comprises an elongated first part to be mounted on the facade or wall, a number of nozzles are disposed in the first part of the frame, spaced along the length thereof. In this way a homogenous spray can be realised over the entire length of the sunshade means, whilst a relatively small force per nozzle for dispersing the spray suffices for obtaining the desired cooling effect, so that people will not experience any discomfort from spray being jetted out with too much force.

In another embodiment of the awning according to the invention, in which the frame comprises an elongated first part to be mounted on the facade or wall and a movable second part to which the screen is attached, which second part of the frame is connected to the first part of the frame by means of pivot arms, a number of nozzles are disposed in the second part of the frame, spaced along the length thereof.

The nozzles disposed in the second part of the frame make it possible to have the spraying take place at points spaced from the facade or wall on which or in which the awning is mounted, without having to install posts or masts for attaching pipes fitted with nozzles thereto, as is the case with a spraying installation to be installed as a separate unit.

In a preferred embodiment of the awning according to the invention, in which one or more nozzles are disposed in the pivot arms, a homogeneous spraying effect and a resulting cooling effect can be obtained over substantially the entire space under the screen.

By integrating the spraying installation not only in the part of the frame that is to be fixedly mounted but also in the movable part or in the pivot arms thereof, an effective cooling action can be effected under the screen or the canvas of the sunshade means according to the invention in an efficient manner, without having to install separate nozzles or separate pipes, whilst retaining an aesthetic appearance of the awning.

In another embodiment of the invention, one or more of the nozzles are adjustably disposed for dispersing the spray in a desired direction. In a simplified embodiment, the nozzles are manually adjustable, and in a more advanced embodiment of the awning according to the invention, the one nozzle or all nozzles are disposed in the parts of the frame or the pivot arms in such a manner as to be adjustable by remote control.

In another preferred embodiment of the awning according to the invention, the one nozzle or all nozzles are capable for making a sweeping or oscillating movement for automatically dispersing the spray while sweeping. It will be understood that in this way an even better dispersion of the spray all over the space under the screen and the space directly adjacent thereto is effected.

In yet another embodiment of the invention, impeller means are provided for fanning out a spray dispersed by the spraying installation so as to effect an optimum dispersion of the spray under the awning. These impeller means may comprise one or more fans mounted on or in the frame.

In an embodiment of the awning, in which the frame comprises a first part to be fixedly mounted and a second movable part, the fans may be provided on or in the first part as well as on and in the second part and on and in the support means via which the movable part is connected to the fixed first part of the frame.

In an embodiment of the invention, the impeller means are mounted so that they are located upstream of the nozzles, seen in the dispersion direction of the spray, and in yet another embodiment of the invention the impeller means are mounted so that they are located downstream of the nozzles, seen in the dispersion direction of the spray. The impelling direction of the impeller means, i.e. the direction in which air is fanned out by the impeller means, is preferably a direction perpendicular to the direction in which the spray is dispersed. It is also possible, however, to direct the impellers transversely or substantially transversely to the direction in which the spray is dispersed, or to combine the directions and/or to use sweeping impeller means.

In addition to providing an improved cooling effect by realising an even better dispersion of the spray in the space under the awning, as described in the foregoing, the impeller means also stir the air under the screen or canvas, thus realising a better through-flow of the air. The risk of accumulations of dust particles, pollen and other impurities in the air and insects is thus effectively reduced.

The frame of the awning is provided with a pipe extending within the frame for supplying a liquid to be sprayed to a nozzle mounted in the wall of the pipe for dispersing the liquid in the form of a spray from the interior of the pipe via the at least one nozzle. The pipe is arranged for being connected to a module for supplying the liquid to be sprayed to the nozzle under pressure.

Preferably, water is used as the liquid, so that it will be advantageous if the pipe is made of copper, stainless steel, aluminium or plastic material in order to prevent contamination of the water and leakage due to corrosion or the like.

In an embodiment of the invention, pipes in parts of the frame that are movable with respect to each other, such as the first frame part to be fixedly mounted and the second movable frame part, are connected in a fluid-tight manner by means of flexible pipes or hoses for the purpose of forming a closed circulation system into which the liquid to be sprayed is to be introduced.

It is noted that the frame parts themselves may also be fluid-tight, comprising channels formed therein and nozzles mounted in the respective frame parts, which terminate in the channels, for supplying the liquid to be sprayed to the nozzles via the channels.

To supply a liquid to be sprayed to the spraying installation of the awning according to the invention, the invention provides a module to be separately mounted and connecting means for connecting the module to the spraying installation of the awning, wherein the module comprises a pump and means for connecting the module to a liquid supply source for supplying a liquid from the liquid supply source to the spraying installation under pressure for dispersing the liquid in the form of a spray.

Such a module preferably comprises means for cooling and/or heating the liquid to be supplied to the spraying installation. This makes it possible to use the awning not only on hot days but also during colder periods for providing a certain degree of heating under the screen of the awning by heating the liquid to be sprayed.

The use of heating means is furthermore advisable in order to prevent contamination of the spraying installation of the awning with legionella, which is achieved by heating the liquid to about 50-70 °C and spraying the liquid for some time. This can be done during the night, for example, without any hazard for persons or animals present under the screen or canvas. For additional safety, the nozzles may be set to spray in the same direction in that case.

In particular in the case of commercial applications, for example at outdoor cafés and the like, it may be advantageous to add an aromatic substance and/or a colorant to the liquid of the spraying installation. Furthermore, disinfectants and/or insecticides against mosquitoes, flies and the like may be added to the liquid. Consequently, the invention further provides a module comprising means for adding such substances or agents to the liquid to be sprayed.

Although a tap for supplying the liquid to be sprayed is frequently available, the invention provides an embodiment wherein the liquid supply source of the module comprises a refillable liquid reservoir for supplying liquid to the spraying installation from this reservoir. In this way it is possible to use the awning according to the invention at practically any location, without being dependent on a water supply source.

In yet another embodiment, the module is provided with its own electrical power source, such as a battery and/or solar cells or the like for energizing inter alia the pump for spraying the liquid. In the case of an electrically operated awning it is also possible to energise the motor for operating the awning from the module. This embodiment of the invention makes it possible to realise a completely stand-alone operation of the awning according to the invention.

According to the invention, the module may be provided with adjusting means for adjusting the pressure with which the spray is dispersed by the spraying installation. The module may furthermore be arranged for supplying the liquid to the spraying installation in a pulsating manner. All this is done in order to achieve an optimum effect while minimally interfering with the way a person present under the awning according to the invention perceives his environment.

The invention will be described in more detail hereinafter on the basis of preferred embodiments thereof, without being limited to such embodiments, however. In the figures, like numerals refer to identical or functionally identical parts.
Figure 1 is a schematic, perspective view of a preferred embodiment of an awning according to the invention of the extension arm or retractable type.
Figures 2, 3 and 4 are larger-scale sectional views along the lines II-II, III-III and IV-IV, respectively, in figure 1.
Figure 5 is a schematic, perspective view of another preferred embodiment of an awning according to the invention of the extension arm or retractable type, which is provided with impeller means.
Figures 6, 7 and 8 are larger-scale sectional views along the lines VI-VI, VII-VII and VIII-VIII, respectively, in figure 5.
Figure 9 is a schematic, perspective view of a part of an awning of the extension arm or retractable type according to the invention, which is connected to a module for supplying liquid to be sprayed.
Figures 10 and 11 are larger-scale sectional views along the lines X-X and XI-XI, respectively, in figure 9.
Figures 12, 13, 14, 15 and 16 are schematic, perspective views of a foldable or slidable awning according to the present invention.

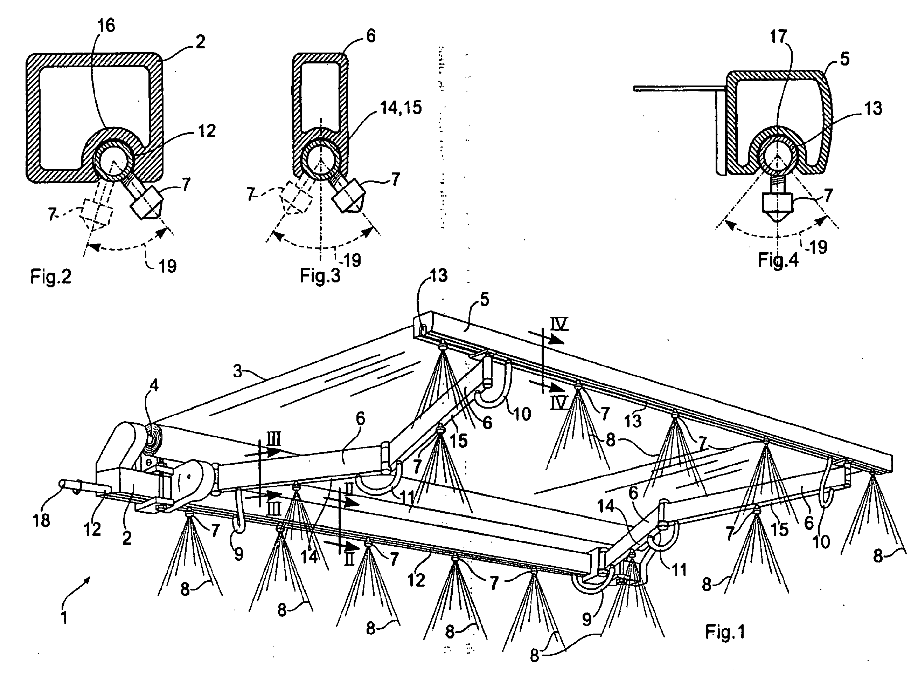

The awning according to the invention that is shown in figure 1 is of the so-called extension arm or retractable type suitable for being mounted on or in the outer wall of a building. The awning, which is indicated as a whole at 1, comprises an elongated frame having a first frame part 2, from which sunshade means 3 in the form of an opaque screen or canvas can stretch out some distance with respect to the first frame part 2.

The sunshade means 3 in the form of a screen or canvas is wound on a so-called roller tube 4, which is connected to the first frame part 2. Attached to the outwardly projecting end of the sunshade means 3 is a movable second frame part 5 in the form of a so-called end beam or end tube. The second frame part 5 is supported by pivot arms 6 connected to the first frame part 2.

In the illustrated embodiment, the pivot arms 6 are shown to extend below the sunshade means 3, seen in the plane of the drawing. It is also conceivable, however, to mount the pivot arms 6 above the sunshade means 3, seen in the plane of the drawing.

The awning 1 may be manually or electrically operated, in which latter case an electric driving motor (not shown) may be accommodated in the roller tube 4, by means of which the sunshade means 3 in the form of the canvas or a screen can be wound on the roller tube 4 or be unwound therefrom. Depending on the construction, also the angle at which the sunshade means 3 are oriented with respect to a facade or a wall of a building can be varied.

According to a preferred embodiment of the invention, nozzles 7 are mounted in the first frame part 2, the second frame part 5 and the pivot arms 6, from which nozzles a moisture spray or mist 8 can be dispersed under the sunshade means 3.

Although this preferred embodiment is shown to comprise several nozzles 7 spaced along the length of the first frame part 2, the second frame part 5 and the pivot arms 6, it will be understood that only one nozzle or a few nozzles may suffice, for example only in the first frame part 2, only in the second frame part 5 or only in the pivot arms 6.

In the situation in which the pivot arms 6 are located above the sunshade means 3, seen in the plane of the drawing, the spray delivered by the pivot arms 6 functions to moisturise and thus cool the sunshade means 3. It will be understood that according to the invention the nozzles 7 in, for example, the second frame part 5 may also be mounted so that they moisturise the sunshade means 3 on the upper side, seen in the plane of the drawing, for cooling the sunshade means 3.

Figure 1 furthermore clearly shows that the pivot arms 6 are connected to the first frame part 2 and the second frame part 5 by means of flexible pipes or hoses 9 and 10, respectively, whilst a flexible pipe or hose 11 is also provided between the halves of the pivot arms 6.

The flexible hoses 9, 10, 11 are connected in a fluid-tight manner to pipes or tubes 12, 13, 14 and 15 extending in the first frame part 2, the pivot arms 6 and the second frame part 5, respectively. Mounted in the pipes or tubes 12, 13, 14, 15 are the nozzles 7 for producing the spray 8.

For a better understanding of the way in which the nozzles 7 and the pipes or tubes 12, 13, 14, 15 are mounted in the respective frame parts 2, 5 and the pivot arms 6, reference is made to the sectional drawings of figures 2, 3 and 4.

Figure 2 is a sectional view of the first frame part 2 along the line II-II in figure 1. According to the invention, a cavity 16 extending in the longitudinal direction of the first frame part 2 from the outer side thereof is formed in the first frame part 2, in which cavity the pipe 12 is accommodated.

Similarly, a cavity 17 extending in the longitudinal direction of the second frame part 5 from the outer side thereof is formed in the second frame part 5, in which cavity the pipe 13 extends, as is shown in figure 4, which is a sectional view along the line IV-IV in figure 1.

Figure 3 is a sectional view along the line III-III in figure 2 of an arm half of the pivot arms 6. This figure, too, shows that an opening 18 which is accessible from the outer side is formed in the longitudinal direction in the arm half in question, in which opening the pipe 14, 15 is accommodated.

As figures 2, 3 and 4 clearly shown, the nozzles 7 are mounted in the wall of the respective pipes or tubes 12, 13, 14 and 15, for example by means of a fluid-tight screw thread, in such a manner that a liquid can be supplied to a nozzle 7 under pressure from a pipe or tube 12, 13, 14, 15. The nozzles in question are also referred to as "spraying nozzles" or "misting nozzles".

The pipes 12, 13, 14 and 15 and the flexible hoses 9, 10 and 11 form a closed, fluid-tight circulation system which extends from an inlet 18 which, seen in the drawing, is located to the left of the first frame part 2, via a pivot arm 6, the second frame part 5 and back to the first frame part 2 again via another pivot arm 6. In this way liquid can be pumped to the various nozzles 7 under pressure from the inlet 18, which liquid can subsequently be dispersed in the form of a spray 8 by the nozzles 7 in the space under the sunshade means 3.

In a preferred embodiment of the invention, the pipes or tubes 12, 13, 14, 15 in question are mounted for rotation about their longitudinal axis in the respective cavities 16, 17, 18 of the frame parts, so that these pipes 12, 13, 14, 15 can be manually or automatically rotated via suitable electrically or mechanically operated drive means for adjusting the spraying direction of a nozzle 7. The electrical operation may be remotely controlled via suitable remote control means (not shown).

In a preferred embodiment of the invention, the drive means of one or more of the pipes 12, 13, 14 and 15 are so arranged that the nozzles 7 are continuously swept between a first and a second extreme position in use, as is schematically indicated by the arrows 19 in figures 2, 3 and 4.

Nozzles for use in the awning according to the invention are known per se in the art and need not be further explained to those skilled in the art. The pipes or tubes 12, 13, 14, 15 are preferably made of copper, stainless steel, aluminium or plastic material, such that there is no danger to public health caused by the migration of material particles from a pipe into the liquid to be sprayed.

The cavities 16, 17 and 18 can be formed in the frame parts 2, 5 and the pivot arms 6, respectively, by extrusion. The pipes 12, 13, 14 and 15 can in that case be inserted into the cavities 16, 17, 18 in the longitudinal direction of the respective frame parts or arm parts in question. The cavities 16, 17, 18 are so dimensioned that the pipes or tubes 12, 13, 14, 15 inserted therein cannot be moved in a direction transversely to the pipe. In this way a simple but effective integration of the spraying installation in the awning is achieved, in which the aesthetic appearance of the awning is retained without the spraying installation being found objectionable because of the presence of separate, freely suspended nozzles or the like. The hoses 9, 10, and 11 can be kept comparatively short, so that they will not be experienced as aesthetically objectionable.

Mechanical and/or electric driving means for rotating the pipes or tubes 12, 13, 14, 15 are known per se to those skilled in the art and require no further explanation herein.

It will be understood that the normal operation of the awning 1 will by no means be limited by the integration of the spraying installation therein as proposed by the invention, and that the spraying installation, when activated, provides a cooling effect to the persons present in the space under the sunshade means 3.

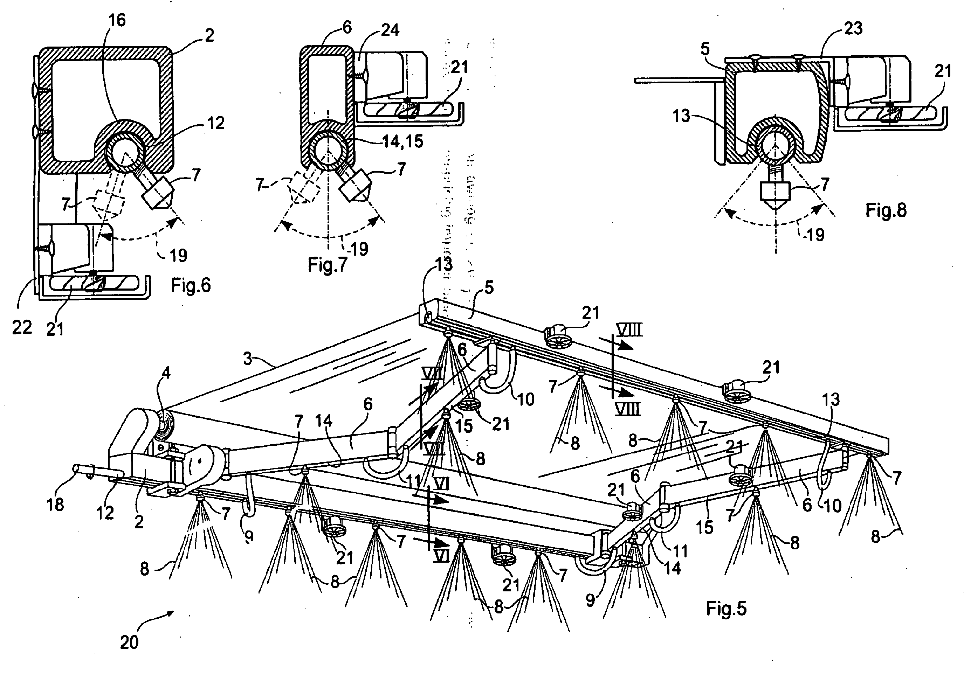

Figure 5 shows an embodiment of the awning 1 similar to the embodiment described above and shown in figures 1-5. In addition to the embodiment as discussed in the foregoing, the embodiment of the awning 20 that is shown in figure 5 comprises impeller means 21 mounted to one or more of the first frame part 2, the second frame part 5 and the pivot arms 6.

The impeller means may be configured as comparatively small and light fans, which may be disposed either upstream or downstream of the spray 8 produced by the nozzles 7.

Figures 6, 7 and 8 are sectional views along the lines VI-VI, VII-VII and VIII-VIII, respectively, in figure 5.

In Figure 6 the impeller means 21 are clearly shown to be mounted downstream of the nozzles 7, whilst in figures 7 and 8 the impeller means are disposed upstream of the nozzles 7. Suitable means of attachment 22, 23 and 24 are provided for attaching the impeller means 21 externally to a respective frame part or a pivot arm part, as is shown in sectional view in figures 6, 7 and 8. This need not be further explained to those skilled in the art.

Although not explicitly shown, it will be understood that the impeller means 21, for example in the form of built-in fans, may also be built into the first and/or the second frame part 2, 5 and/or the pivot arms 6, so that they will not project from the frame, which is generally preferred for aesthetic reasons.

In figure 5 the impeller means 21 are all shown to blow in the dispersion direction of the spray 8. It is also possible, however, to mount one or more of the impeller means 21 in the direction transversely to the dispersion direction of the sprays 8 (not shown), thereby effecting an efficient dispersion of the spray under the sunshade means 3.

The air swirls caused by the impeller means 21 also carry off the particles, pollen and other impurities that have accumulated under the sunshade means 3. Furthermore, insects and the like dislike air swirls, so that the impeller means 21 are also effective in keeping insects away from the space under the sunshade means 3.

The impeller means 21 may be electrically connected, in a manner which is known per se, to an electric motor drive of the roller tube 4, for example, or by a separate electrical power connection (not shown).

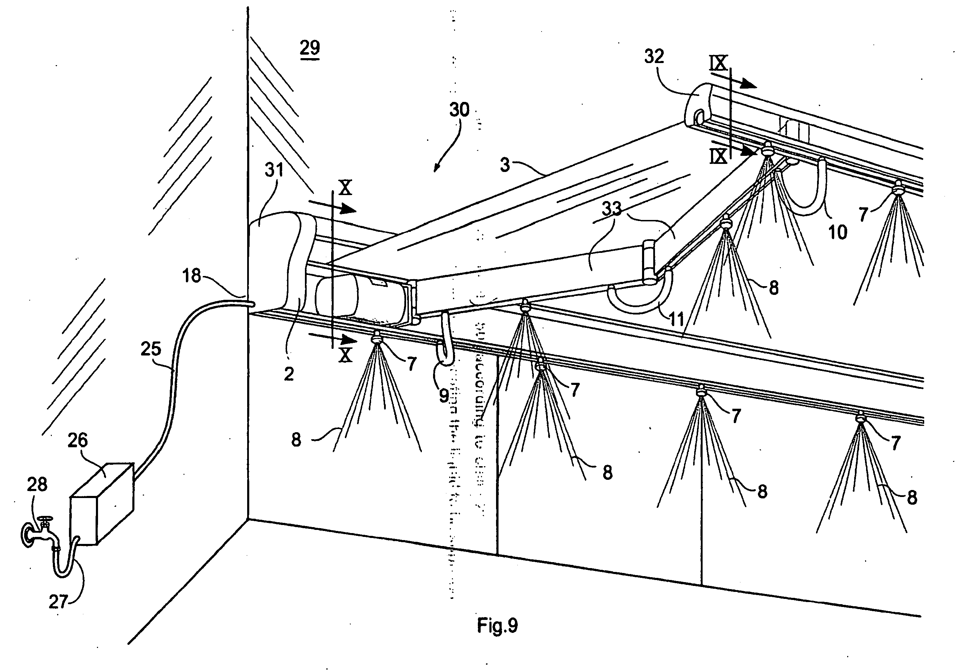

Figure 9 shows an embodiment of an awning 30 according to the invention mounted on an outer wall 29 of a building, in which the inlet 18 is connected to a module 26 via a pipe 25 for supplying liquid to be sprayed to the awning under pressure.

In the illustrated embodiment, the module 26 is provided with a liquid supply line 27 for connection to a tap 28 or the like and with an electrically driven pump (not shown), which is known per se, for pumping the liquid to be sprayed from the liquid supply line to the awning 30 under pressure.

Instead of being provided with the liquid supply line 27 for connection to a tap 28, or in addition thereto, the module 26 may comprise a refillable liquid reservoir for pumping liquid from the reservoir to the awning. Preferably, water is used as the liquid to be sprayed, to which an aromatic substance and/or a colorant may be added, if desired, to obtain special fragrance and/or colour effects. It is also possible, for example to add a disinfectant or an insecticide or the like to the liquid. The module 26 is to that end provided with suitable dosaging means and supply means (not shown).

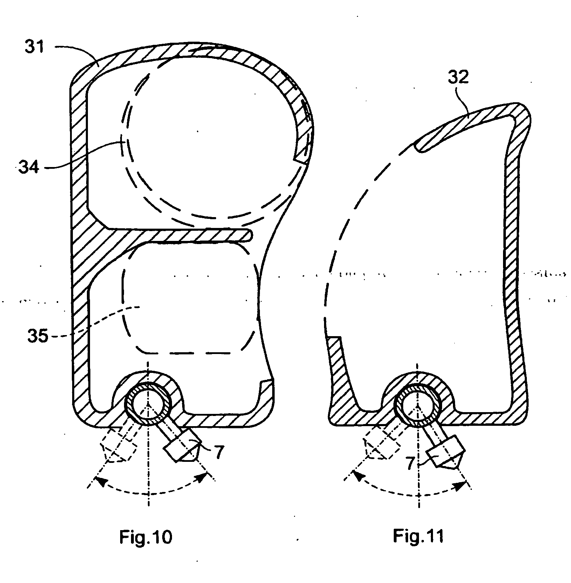

A special effect is obtained in that case if the nozzles disperse a coloured spray and the awning 1 is provided with lighting, as is illustrated in broken lines 35 in the sectional view of figure 10 along the line X-X in the fixed first frame part 31 in figure 9. Figure 11 shows a sectional view along the line XI-XI in figure 9 of the movable second frame part 32 with a spraying installation according to the invention integrated therein.

By furthermore providing the module 26 with its own power source, for example in the form of a battery or one or more solar cells, which may be mounted on the module but for example also on the frame of the awning, the awning according to the invention can be installed as a completely detached unit. It is also possible to energise an electric operator for the roller tube 34 of the awning from the module 26, and also the impeller means 21, insofar as such impeller means are provided. Said impeller means may be advantageously integrated in the frame parts 31 and 32 (not shown) in the embodiment of the awning 30.

It will be understood that the awning provided with an integrated spraying installation according to the invention can be installed in a simple, quick and easy manner, with the awning and the spraying installation being mounted in one operation, this in contrast to mounting the awning and the spraying installation as separate units. In the latter case an aesthetic effect cannot be obtained, especially if pipes, posts and masts must be installed for producing a spray at a point spaced from the facade or wall 29 on which the module 26 is mounted.

The module 26 may furthermore be provided with adjusting means (not shown) for adjusting the pressure with which the spray is dispersed by the spraying installation, this in order to prevent injury or an unpleasant sensation being caused by the spray flow. If necessary, the module 26 may be arranged for supplying liquid to the spraying installation in a pulsating manner, making it possible to effect a highly fascinating spectacle, for example to the rhythm of music or the like, especially when a coloured liquid is used.

The spraying installation, in the form of pipes or tubes 12, 13, 14, 15 with the nozzles 7 mounted therein and the flexible connecting hoses 9, 10, 11, and the module 26 provided with the connecting means 25 and 27 may be marketed as separate, individual units to be integrated in an existing awning. It is preferred, however, to use an awning in which the respective frame parts 2, 5, 6, 31, 32, 33 are configured or extruded in such a manner that the spraying installation, and the impeller means, if necessary, are integrated therein. The embodiment thus obtained is not only of compact construction but also aesthetically sound.

In a practical embodiment of the spraying installation, a spray or fine mist with a droplet size of about 5 micron or less can be produced by means of a pressure of about 70 bar. Such a size makes it possible to obtain an effective evaporation of the liquid to be sprayed, and thus a desired cooling effect, because the heat used for evaporating the liquid is extracted from the air under the sunshade means 3.

In a practical embodiment of the awning according to the invention, the nozzles 7 are arranged at intervals of 50-75 cm in the longitudinal direction of a frame part. In practice, awnings having a length of about 2-15 m and a maximum span width or extension of 2.5-3 m can be used, by means of which a relatively large space under the sunshade means 3 can be cooled.

To obtain an optimum cooling effect, the module 26 may be provided with a separate cooling device or cooling means (not shown). According to the invention the module 26 may also be provided with a heating device or heating means for heating the liquid to be sprayed. The heating means are in particular arranged for heating the liquid to a temperature of 50-75 °C in order to prevent legionella contamination, which can be done by operating the spraying installation with liquid of such a high temperature from time to time.

It is furthermore advisable within the framework to keep the pump in the module running when the spraying installation is turned off until no spray is being dispersed any more.

It will be understood that the awning as discussed in the foregoing is not limited to an awning of the extension arm or retractable type, but that also a dome awning or the like can be provided with an integrated spraying installation according to the invention.

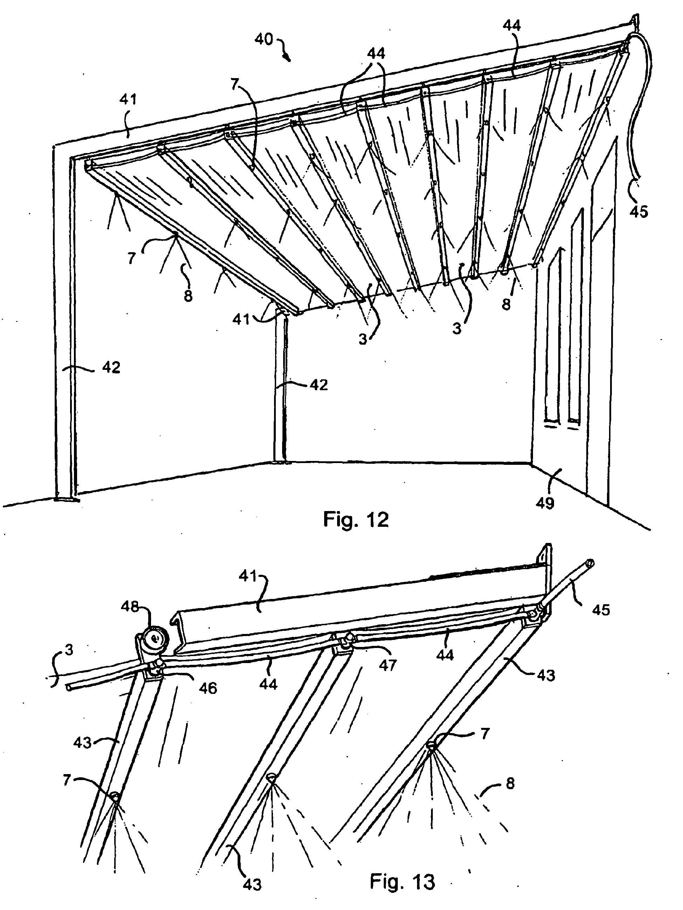

Figure 12 shows an embodiment of a foldable or slidable awning according to the present invention, which is indicated as a whole by reference numeral 40.

The awning 40 comprises a frame having vertical support posts 42 and guide rails 41 which, at one end connect to a support post 42 and at an other opposite end connect to an outer wall 49 of a building or the like.

The frame comprises further elongated crossbars or transverse members 43 which at each end are transverse to and slidably supported by a guide rail 41. Between adjacent crossbars 43 lines 3 of sunshade means extend in longitudinal direction of the crossbars 43, such as a screen, fabric or canvas.

The crossbars 43 and the lines 3 of sunshade means, in use, extend from the wall 49 of the building, such as disclosed in figure 12. In the retracted state, the crossbars 43 and the lines 3 of sunshade means are gathered at an end of the guide rails 41, preferably near the wall 49 of the building.

In accordance with the invention, nozzles 7 are mounted in the crossbars 43, for spraying liquid 8 in the space beneath the sunshade means 3. In order to feed liquid to the nozzles 7, the crossbars 43 may comprise a hollow compartment along their length or the nozzles 8 connect by a suitable piping or hose mounted in the crossbars 43. At an end the crossbars 43 connect by flexible hoses 44 and an inlet hose 45 for feeding liquid to the nozzles 7.

Figure 13 shows a detail of the foldable or slidable awning 40 according to figure 12, showing guide rollers 48 by which the crossbars 43 may slide in longitudinal direction of a U-shaped guide rail 41. A flexible hose 44 connects by connection means 46, 47 to a crossbar 43.

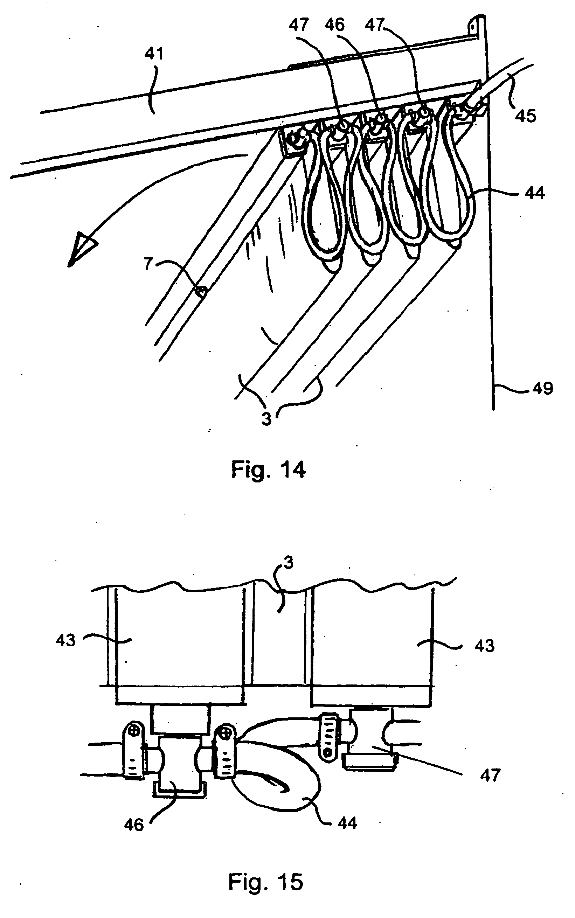

Figure 14 shows the awning 40 in its retracted state, wherein the crossbars 43 are gathered near the outer wall 49 of the building and wherein the lines 3 of sunshade means are folded, like each hose 44.

Figure 15 shows on an enlarged scale, two adjacent crossbars 43 in the retracted position of the awning 40. From this enlarged detail of figure 14, it can be seen that the hose connections 46, 47 are staggeredly arranged in lengthwise direction of the crossbars 43, that is the hose connections 46 extends further from the crossbar 43 than the hose connection 47, such that the crossbars 43, in the retracted state of the awning, can be located close next to each other.

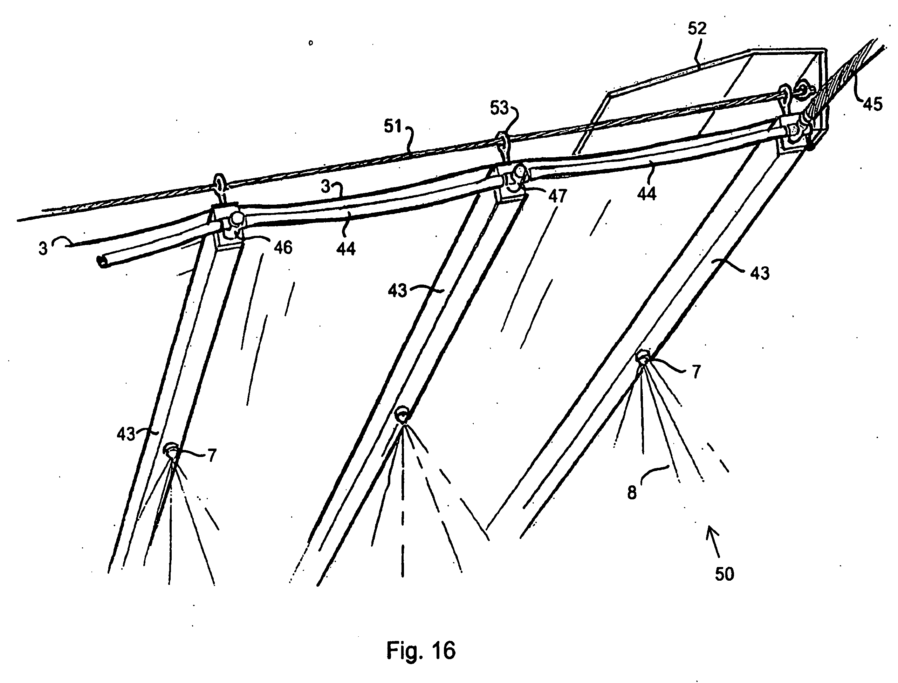

Figure 16 shows an other embodiment of a foldable or slidable awning 50, wherein the guide rails 41 of the awning 40 of figures 12-15 are replaced by a support cable 51 along which the crossbars 43 are slidably supported by eye hooks 53. A cover strip 52, which in use is mounted to the wall 49 of a building, may extend above the awning, seen in the plane of the drawing, in order to protect the retracted crossbars 43 and lines 3 of sunshade means in their retracted position, from rain, snow and dust.

Although not explicitly shown in figures 12-16, impeller means 21 may be provided with the crossbars 43 for further dispersion of spray or mist 8 of the nozzles 7.

## Claims

1. An awning (1; 20; 30; 40; 50) of the type that is to be mounted on or in a facade or a wall (29; 49) of a building or on a vehicle, comprising a frame having at least one elongated frame part (2, 5, 6; 31, 32, 33; 43) and a sunshade means (3) in the form of a screen that, when in a mounted condition, is movable with respect to said facade or wall (29; 49), and spraying means, comprising a plurality of nozzles (7), **characterized in that** said at least one elongated frame part (2, 5, 6; 31, 32, 33; 43) comprises a channel for supplying liquid to said nozzles (7), wherein said nozzles (7) are disposed in said at least one elongated frame part (2, 5, 6; 31, 32, 33; 43) and terminate in said channel for spraying said liquid (8) from said frame.

2. An awning (1; 20; 30; 40; 50) according to claim 1, wherein said channel comprises a pipe (12, 13, 14, 15) mounted in said at least one elongated frame part (2, 5, 6; 31, 32, 33; 43), and extending in longitudinal direction of said at least one elongated frame part (2, 5, 6; 31, 32, 33; 43).

3. An awning (1; 20; 30) according to claim 1, wherein said channel comprise a pipe (12, 13, 14, 15) accommodated in a cavity (16, 17, 18) formed in said at least one elongated frame part (2, 5, 6; 31, 32, 33), said cavity (16, 17, 18) and said pipe (12, 13, 14, 15) extending in longitudinal direction of said at least one elongated frame part (2, 5, 6; 31, 32, 33).

4. An awning (1; 20; 30; 40; 50) according to claim 1, wherein said channel comprises a hollow compartment of said at least one elongated frame part (2, 5, 6; 31, 32, 33; 43), said hollow compartment extending in longitudinal direction of said at least one elongated frame part (2, 5, 6; 31, 32, 33; 43).

5. An awning (1; 20; 30; 40; 50) according to any of the claims 1 - 4, wherein said at least one elongated frame part comprises a first elongated frame part (2; 31; 43) to be mounted on the facade or wall (29; 49), wherein said nozzles (7) are spaced along the length of said first elongated frame part (2; 31; 43).

6. An awning (1; 20; 30; 40; 50) according to any of the claims 1 - 5, wherein said at least one elongated frame part comprises a second elongated frame part (5; 32; 43) moveable with said sunshade means (3), wherein said nozzles (7) are spaced along the length of said second elongated frame part (5; 32; 43).

7. An awning (1; 20; 30) according to any of the claims 1 - 6, wherein said at least one elongated frame part comprises pivot arms (6; 33), wherein said nozzles (7) are spaced along the length of said pivot arms (6; 33).

8. An awning (40) according to any of the claims 1 - 4, wherein said at least one elongated frame part comprises a plurality of elongated slidably parallel mounted crossbars (43) connected by foldable lines of sunshade means (3), wherein said nozzles (7) are disposed in a plurality of said crossbars (43), spaced along the length of a crossbar (43).

9. An awning (1; 20; 30; 40; 50) according to any of the claims 1 - 8, wherein one or more of said nozzles (7) are adjustably disposed for dispersing the spray of liquid (8) in a desired direction.

10. An awning (1; 20; 30; 40; 50) according to claim 9, wherein the or each nozzle (7) is manually adjustable.

11. An awning (1; 20; 30; 40; 50) according to claim 9, wherein the or each nozzle (7) is adjustable by remote control.

12. An awning (1; 20; 30; 40; 50) according to any of the claims 9 - 11, wherein the or each nozzle (7) is capable of sweeping movement for dispersing the spray of liquid (8) while sweeping.

13. An awning (1; 20; 30; 40; 50) according to any of the preceding claims, further comprising impeller means (21) for fanning out a spray of liquid (8) dispersed by said nozzles (7), wherein said impeller means (21) may comprise one or more fans mounted on or in said frame.

14. An awning (1; 20; 30; 40; 50) according to claim 13, wherein said impeller means (21) are disposed upstream of the spray of liquid (8) dispersed by said nozzles (7).

15. An awning (1; 20; 30; 40; 50) according to claim 13, wherein said impeller means (21) are disposed downstream of the spray of liquid (8) dispersed by said nozzles (7).

16. An awning (1; 20; 30; 40; 50) according to any of the claims 13 - 15, wherein said impeller means (21) are disposed for operation in the dispersion direction of the spray of liquid (8) dispersed by said nozzles (7).

17. An awning (1; 20; 30; 40; 50) according to any of the claims 13 - 15, wherein said impeller means (21) are disposed for operation in a direction transversely to the dispersion direction of the spray of liquid (8) dispersed by said nozzles (7).

18. An awning (1; 20; 30; 40; 50) according to any of the previous claims, dependent on claim 2 or 3, wherein said pipe (12, 13, 14, 15) is arranged for being connected to a module (26) for supplying liquid to said pipe (12, 13, 14, 15).

19. An awning (1; 20; 30; 40; 50) according to claim 18, wherein said pipe (12, 13, 14, 15) is made of copper, stainless steel, aluminium or plastic material.

20. An awning (1; 20; 30; 40; 50) according to claim 18 or 19, wherein one or more pipes (12, 13, 14, 15) in elongated frame parts (2, 5, 6; 31, 32, 33; 43) that are movable with respect to each other are connected in a fluid-tight manner by means of flexible pipes (9, 10, 11; 44) for the purpose of forming a closed circulation system into which the liquid to be sprayed is to be introduced.

21. An awning (1; 20; 30; 40; 50) according to any of the preceding claims, comprising a module (26) and connecting means (25) for connecting said module (26) to said channel comprising said nozzles (7), wherein said module (26) comprises a pump and means (27) for connecting said module (26) to a liquid supply source (28) for supplying, under pressure, a liquid from the liquid supply source (28) to the channel for dispersing said liquid from said nozzles (7).

22. An awning (1; 20; 30; 40; 50) according to claim 21, wherein said module (26) comprises means for cooling and/or heating the liquid to be supplied.

23. An awning (1; 20; 30; 40; 50) according to claim 21 or 22, wherein said module (26) comprises means for adding an aromatic substance and/or a colorant and/or a disinfectant and/or an insecticide to the liquid to be supplied.

24. An awning (1; 20; 30; 40; 50) according to any of the claims 21 - 23, wherein the liquid supply source (28) for said module (26) comprises a refillable liquid reservoir for supplying liquid from said reservoir.

25. An awning (1; 20; 30; 40; 50) according to any of the claims 21 - 24, wherein said module (26) is provided with its own electrical power source, such as a battery and/or solar cells.

26. An awning (1; 20; 30; 40; 50) according to any of the claims 21 - 25, wherein said module (26) is provided with adjusting means for controlling the pressure with which the spray of liquid (8) is dispersed by said nozzles (7).

27. An awning (1; 20; 30; 40; 50) according to any of the claims 21 - 26, wherein said module (26) is arranged for supplying said liquid in a pulsating manner.

## Patentansprüche

1. Markise (1; 20; 30; 40; 50) der Art, die an einer Vorderseite oder einer Wand (29; 49) eines Gebäudes oder an einem Fahrzeug zu montieren ist, umfassend einen Rahmen, der mindestens ein längliches Rahmenteil (2, 5, 6; 31, 32, 33; 43) und ein Sonnenschirmmittel (3) in Form einer Abschirmung aufweist, die, wenn sie in einem montierten Zustand ist, in Bezug auf die Vorderseite oder Wand (29; 49) beweglich ist, und Sprühmittel, umfassend eine Mehrzahl Düsen (7), **dadurch gekennzeichnet, dass** das mindestens eine längliche Rahmenteil (2, 5, 6; 31, 32, 33; 43) einen Kanal zum Zuführen von Flüssigkeit an die Düsen (7) umfasst, wobei die Düsen (7) in dem mindestens einen länglichen Rahmenteil (2, 5, 6; 31, 32, 33; 43) angeordnet sind und in dem Kanal zum Sprühen der Flüssigkeit (8) von dem Rahmen enden.

2. Markise (1; 20; 30; 40; 50) nach Anspruch 1, wobei der Kanal ein Rohr (12, 13, 14, 15) umfasst, das in dem mindestens einen länglichen Rahmenteil (2, 5, 6; 31, 32, 33; 43) montiert ist, und sich in Längsrichtung des mindestens einen länglichen Rahmenteils (2, 5, 6; 31, 32, 33; 43) erstreckt.

3. Markise (1; 20; 30) nach Anspruch 1, wobei der Kanal ein Rohr (12, 13, 14, 15) umfasst, das in einem Hohlraum (16, 17, 18) untergebracht ist, der in dem mindestens einen länglichen Rahmenteil (2, 5, 6; 31, 32, 33) gebildet ist, wobei sich der Hohlraum (16, 17, 18) und das Rohr (12, 13, 14, 15) in Längsrichtung des mindestens einen länglichen Rahmenteils (2, 5, 6; 31, 32, 33) erstrecken.

4. Markise (1; 20; 30; 40; 50) nach Anspruch 1, wobei der Kanal ein hohles Fach des mindestens einen länglichen Rahmenteils (2, 5, 6; 31, 32, 33; 43) umfasst, wobei sich das hohle Fach in Längsrichtung des mindestens einen länglichen Rahmenteils (2, 5, 6; 31, 32, 33; 43) erstreckt.

5. Markise (1; 20; 30; 40; 50) nach einem der Ansprüche 1 - 4, wobei das mindestens eine längliche Rahmenteil ein erstes längliches Rahmenteil (2; 31; 43) umfasst, das an der Vorderseite oder der Wand (29; 49) zu montieren ist, wobei die Düsen (7) entlang der Länge des ersten länglichen Rahmenteils (2; 31; 43) beabstandet sind.

6. Markise (1; 20; 30; 40; 50) nach einem der Ansprüche 1 - 5, wobei das mindestens eine längliche Rahmenteil ein zweites längliches Rahmenteil (5; 32; 43) umfasst, das mit dem Sonnenschirmmittel (3) beweglich ist, wobei die Düsen (7) entlang der Länge des zweiten länglichen Rahmenteils (5; 32; 43) beabstandet sind.

7. Markise (1; 20; 30) nach einem der Ansprüche 1 - 6, wobei das mindestens eine längliche Rahmenteil Schwenkarme (6; 33) umfasst, wobei die Düsen (7) entlang der Länge der Schwenkarme (6; 33) beabstandet sind.

8. Markise (40) nach einem der Ansprüche 1 - 4, wobei das mindestens eine längliche Rahmenteil eine Mehrzahl länglicher verschiebbar parallel montierter Querstreben (43) umfasst, die durch faltbare Reihen des Sonnenschirmmittels (3) verbunden sind, wobei die Düsen (7) in einer Mehrzahl der Querstreben (43) angeordnet sind, beabstandet entlang der Länge einer Querstrebe (43).

9. Markise (1; 20; 30; 40; 50) nach einem der Ansprüche 1 - 8, wobei eine oder mehrere der Düsen (7) zum Dispergieren des Sprühnebels der Flüssigkeit (8) in einer gewünschten Richtung einstellbar angeordnet sind.

10. Markise (1; 20; 30; 40; 50) nach Anspruch 9, wobei die oder jede Düse (7) manuell einstellbar ist.

11. Markise (1; 20; 30; 40; 50) nach Anspruch 9, wobei die oder jede Düse (7) durch Fernsteuerung einstellbar ist.

12. Markise (1; 20; 30; 40; 50) nach einem der Ansprüche 9 - 11, wobei die oder jede Düse (7) in der Lage zu einer schwingenden Bewegung ist, zum Dispergieren des Sprühnebels der Flüssigkeit (8) während des Schwingens.

13. Markise (1; 20; 30; 40; 50) nach einem beliebigen der vorhergehenden Ansprüche, überdies umfassend Gebläseradmittel (21) zum Ausblasen eines Sprühnebels einer Flüssigkeit (8), die von den Düsen (7) dispergiert wird, wobei die Gebläseradmittel (21) ein oder mehrere Gebläse umfassen können, die auf oder in dem Rahmen montiert sind.

14. Markise (1; 20; 30; 40; 50) nach Anspruch 13, wobei die Gebläseradmittel (21) vor dem Sprühnebel der Flüssigkeit (8), die von den Düsen (7) dispergiert wird, angeordnet sind.

15. Markise (1; 20; 30; 40; 50) nach Anspruch 13, wobei die Gebläseradmittel (21) nach dem Sprühnebel der Flüssigkeit (8), die von den Düsen (7) dispergiert wird, angeordnet sind.

16. Markise (1; 20; 30; 40; 50) nach einem beliebigen der Ansprüche 13 bis 15, wobei die Gebläseradmittel (21) für den Betrieb in der Dispersionsrichtung des Sprühnebels der Flüssigkeit (8), die von den Düsen (7) dispergiert wird, angeordnet sind.

17. Markise (1; 20; 30; 40; 50) nach einem beliebigen der Ansprüche 13 bis 15, wobei die Gebläseradmittel (21) für den Betrieb in einer Richtung angeordnet sind, die quer zur Dispersionsrichtung des Sprühnebels der Flüssigkeit (8), die von den Düsen (7) dispergiert wird, verläuft.

18. Markise (1; 20; 30; 40; 50) nach einem beliebigen der vorherigen Ansprüche, abhängig von Anspruch 2 oder 3, wobei das Rohr (12, 13, 14, 15) angeordnet ist, um an ein Modul (26) zum Zuführen von Flüssigkeit an das Rohr (12, 13, 14, 15) angeschlossen zu werden.

19. Markise (1; 20; 30; 40; 50) nach Anspruch 18, wobei das Rohr (12, 13, 14, 15) aus Kupfer, Edelstahl, Aluminium oder Kunststoff besteht.

20. Markise (1; 20; 30; 40; 50) nach Anspruch 18 oder 19, wobei ein oder mehrere Rohre (12, 13, 14, 15) in länglichen Rahmenteilen (2, 5, 6; 31, 32, 33; 43), die im Verhältnis zueinander beweglich sind, auf fluiddichte Weise mittels flexibler Rohre (9, 10, 11; 44) zum Zwecke des Bildens eines geschlossenen Kreislaufsystems verbunden sind, in das die zu sprühende Flüssigkeit einzuführen ist.

21. Markise (1; 20; 30; 40; 50) nach einem beliebigen der vorhergehenden Ansprüche, umfassend ein Modul (26) und Anschlussmittel (25) zum Anschließen des Moduls (26) an den Kanal, umfassend die Düsen (7), wobei das Modul (26) eine Pumpe und Mittel (27) zum Anschließen des Moduls (26) an eine Flüssigkeitsversorgungsquelle (28) zum Zuführen, unter Druck, von Flüssigkeit an den Kanal von der Flüssigkeitsversorgungsquelle (28) zum Dispergieren der Flüssigkeit von den Düsen (7) umfasst.

22. Markise (1; 20; 30; 40; 50) nach Anspruch 21, wobei das Modul (26) Mittel zum Kühlen und/oder Erwärmen der zuzuführenden Flüssigkeit umfasst.

23. Markise (1; 20; 30; 40; 50) nach Anspruch 21 oder 22, wobei das Modul (26) Mittel zum Hinzufügen einer aromatischen Substanz und/oder eines Farbstoffs und/oder eines Desinfektionsmittels und/oder eines Insektizids zur zuzuführenden Flüssigkeit umfasst.

24. Markise (1; 20; 30; 40; 50) nach einem beliebigen der Ansprüche 21 - 23, wobei die Flüssigkeitsversorgungsquelle (28) für das Modul (26) einen nachfüllbaren Flüssigkeitsbehälter zum Zuführen von Flüssigkeit von dem Behälter umfasst.

25. Markise (1; 20; 30; 40; 50) nach einem beliebigen der Ansprüche 21 - 24, wobei das Modul (26) mit seiner eigenen elektrischen Spannungsquelle, wie einer Batterie und/oder Solarzellen, versehen ist.

26. Markise (1; 20; 30; 40; 50) nach einem beliebigen der Ansprüche 21 - 25, wobei das Modul (26) mit einstellbaren Mitteln zum Steuern des Drucks versehen ist, mit dem der Sprühnebel der Flüssigkeit (8) von den Düsen (7) dispergiert wird.

27. Markise (1; 20; 30; 40; 50) nach einem beliebigen der Ansprüche 21 - 26, wobei das Modul (26) zum stoßweisen Zuführen der Flüssigkeit angeordnet ist.

## Revendications

1. Auvent (1 ; 20 ; 30 ; 40 ; 50) du type qui doit être monté sur, ou placé dans, une façade ou un mur (29 ; 49) d'un bâtiment ou d'un véhicule, comportant un bâti possédant au moins une partie de bâti de forme allongée (2 5, 6 ; 31, 32, 33 ; 43) et des moyens de pare-soleil (3) sous la forme d'un écran qui, lorsqu'il est à l'état monté, est mobile par rapport à ladite façade ou audit mur (29 ; 49) et des moyens de pulvérisation comprenant une pluralité de buses (7), **caractérisé en ce que** ladite au moins une partie de bâti de forme allongée (2, 5, 6 ; 31, 32,33 ; 43) comporte un passage permettant de fournir un liquide auxdites buses (7), dans lequel lesdites buses (7) sont disposées dans ladite au moins une partie de bâti de forme allongée (2, 5, 6 ; 31, 32, 33 ; 43) et s'achèvent dans ledit passage pour pulvériser ledit liquide (8) à partir dudit bâti.

2. Auvent (1 ; 20 ; 30 ; 40 ; 50) selon la revendication 1, dans lequel ledit passage comporte un tuyau (12, 13, 14, 15) monté dans ladite au moins une partie de bâti de forme allongée (2, 5, 6 ; 31, 32 ; 33 ; 43) et s'étendant dans la direction longitudinale de ladite au moins une partie de bâti de forme allongée (2, 5, 6 ; 31, 32, 33 ; 43).

3. Auvent (1 ; 20 ; 30) selon la revendication 1, dans lequel ledit passage comporte un tuyau (12, 13, 14, 15) logé dans une cavité (16, 17, 18) formée dans ladite au moins une partie de bâti de forme allongée (2, 5, 6 ; 31, 32, 33), ladite cavité (16, 17, 18) et ledit tuyau (12, 13, 14, 15) s'étendant dans la direction longitudinale de ladite au moins une partie de bâti de forme allongée (2, 5, 6 ; 31, 32, 33).

4. Auvent (1 ; 20 ; 30 ; 40 ; 50) selon la revendication 1, dans lequel ledit passage comporte un compartiment creux de ladite au moins une partie de bâti de forme allongée (2, 5, 6 ; 31, 32, 33 ; 43), ledit compartiment creux s'étendant dans la direction longitudinale de ladite au moins une partie de bâti de forme allongée (2, 5, 6 ; 31,32, 33 ; 43).

5. Auvent (1 ; 20 ; 30 ; 40 ; 50) selon l'une quelconque des revendications 1 à 4, dans lequel ladite au moins une partie de bâti de forme allongée comprend une première partie de bâti de forme allongée (2 ; 31 ; 43) à monter sur la façade ou sur le mur (29 ; 49), dans laquelle lesdites buses (7) sont espacées sur la longueur de ladite première partie de bâti de forme allongée (2 ; 31 ; 43).

6. Auvent (1 ; 20 ; 30 ; 40 ; 50) selon l'une quelconque des revendications 1 à 5, dans lequel ladite au moins une partie de bâti de forme allongée comprend une seconde partie de bâti de forme allongée (5 ; 32 ; 43) pouvant se déplacer avec lesdits moyens de pare-soleil (3), dans lequel lesdites buses (7) sont espacées sur la longueur de ladite seconde partie de bâti de forme allongée (5 ; 32 ; 43).

7. Auvent (1 ; 20 ; 30) selon l'une quelconque des revendications 1 à 6, dans lequel ladite au moins une partie de bâti de forme allongée comprend des bras pivotants (6 ; 33), dans lequel lesdites buses (7) sont espacées sur la longueur desdits bras pivotants (6 ; 33).

8. Auvent (40) selon l'une quelconque des revendications 1 à 4, dans lequel ladite au moins une partie de bâti de forme allongée comporte une pluralité de traverses de forme allongée, montées parallèlement, de façon à pouvoir coulisser (43) raccordées par des zones de couverture pliables des moyens de pare-soleil (3), dans lequel lesdites buses (7) sont disposées dans une pluralité desdites traverses (43), espacées sur la longueur d'une traverse (43).

9. Auvent (1 ; 20 ; 30; 40 ; 50) selon l'une quelconque des revendications 1 à 8, dans lequel l'une ou plusieurs desdites buses (7) est (sont) disposée(s) de façon réglable pour disperser la pulvérisation de liquide (8) dans une direction souhaitée.

10. Auvent (1 ; 20; 30 ; 40; 50) selon la revendication 9, dans lequel la buse ou chaque buse (7) peut être réglée à la main.

11. Auvent (1 ; 20 ; 30 ; 40 ; 50) selon la revendication 9, dans lequel la buse ou chaque buse (7) peut être réglée par une télécommande.

12. Auvent (1 ; 20 ; 30 ; 40 ; 50) selon l'une quelconque des revendications 9 à 11, dans lequel la buse ou chaque buse (7) est capable d'effectuer un mouvement de balayage pour disperser la pulvérisation de liquide (8) tout en opérant un balayage.

13. Auvent (1 ; 20 ; 30; 40 ; 50) selon l'une quelconque des revendications précédentes, comprenant, de plus, des moyens d'hélice (21) pour expulser une pulvérisation de liquide (8) dispersée par lesdites buses (7), dans lequel lesdits moyens d'hélice (21) peuvent comporter une ou plusieurs pale(s) montée(s) sur, ou dans, ledit bâti.

14. Auvent (1 ; 20 ; 30 ; 40 ; 50) selon la revendication 13, dans lequel lesdits moyens d'hélice (21) sont disposés en amont de la pulvérisation du liquide (8) dispersé par lesdites buses (7).

15. Auvent (1 ; 20 ; 30 ; 40 ; 50) selon la revendication 13, dans lequel lesdits moyens d'hélice (21) sont disposés en aval de la pulvérisation du liquide (8) dispersé par lesdites buses (7).

16. Auvent (1 ; 20; 30 ; 40 ; 50) selon l'une quelconque des revendications 13 à 15, dans lequel les moyens d'hélice (21) sont disposés en vue d'agir dans la direction de dispersion de la pulvérisation du liquide (8) dispersé par lesdites buses (7).

17. Auvent (1 ; 20; 30 ; 40; 50) selon l'une quelconque des revendications 13 à 15, dans lequel lesdits moyens d'hélice (21) sont disposés pour agir dans une direction transverse à la direction de dispersion de la pulvérisation du liquide (8) dispersé par lesdites buses (7).

18. Auvent (1 ; 20 ; 30 ; 40 ; 50) selon l'une quelconque des revendications précédentes, dépendante des revendications 2 ou 3, dans lequel ledit tuyau (12, 13, 14, 15) est agencé en vue d'être raccordé à un module (26) permettant de fournir un liquide audit tuyau (12, 13, 14, 15).

19. Auvent (1 ; 20 ; 30 ; 40 ; 50) selon la revendication 18, dans lequel ledit tuyau (12, 13, 14, 15) est constitué de cuivre, d'acier inoxydable, d'aluminium ou de matière plastique.

20. Auvent (1 ; 20 ; 30 ; 40 ; 50) selon la revendication 18 ou 19, dans lequel un ou plusieurs tuyau(x) (12,13, 14, 15) placé(s) dans les parties de bâti de forme allongée (2, 5,6 ; 31, 32, 33 ; 43) qui sont mobiles l'une par rapport à l'autre, est (sont) raccordé(s) d'une façon étanche aux fluides aux moyens de tuyaux souples (9, 10, 11 ; 44) dans le but de constituer un système de circulation fermée dans lequel le liquide à pulvériser doit y être introduit.

21. Auvent (1 ; 20 ; 30 ; 40; 50) selon l'une quelconque des revendications précédentes, comportant un module (26) et des moyens de connexion (25) pour raccorder ledit module (26) audit passage comprenant lesdites buses (7), dans lequel ledit module (26) comporte une pompe et des moyens (27) pour raccorder ledit module (26) à une source d'alimentation en liquide (28) permettant de fournir, sous pression, un liquide venant de la source d'alimentation en liquide (28) au passage permettant de disperser ledit liquide à partir desdites buses (7).

22. Auvent (1 ; 20 ; 30 ; 40 ; 50) selon la revendication 21, dans lequel ledit module (26) comprend des moyens pour refroidir et/ou chauffer le liquide à fournir.

23. Auvent (1 ; 20 ; 30 ; 40 ; 50) selon la revendication 21 ou 22, dans lequel ledit module (26) comprend des moyens pour ajouter une substance aromatique et/ou un colorant et/ou un désinfectant et/ou un insecticide au liquide à fournir.

24. Auvent (1 ; 20 ; 30 ; 40 ; 50) selon l'une quelconque des revendications 21 à 23, dans lequel la source d'alimentation en liquide (28) destinée audit module (26) comprend un réservoir de liquide rechargeable permettant de fournir le liquide à partir dudit réservoir.

25. Auvent (1 ; 20 ; 30 ; 40 ; 50) selon l'une quelconque des revendications 21 à 24, dans lequel ledit module (26) est fourni avec sa propre source de courant électrique, telle qu'une batterie et/ou des piles solaires.

26. Auvent (1 ; 20 ; 30 ; 40 ; 50) selon l'une quelconque des revendications 21 à 25, dans lequel ledit module (26) est prévu avec des moyens d'ajustement pour commander la pression avec laquelle la pulvérisation de liquide (8) est dispersée par lesdites buses (7).

27. Auvent (1 ; 20 ; 30 ; 40 ; 50) selon l'une quelconque des revendications 21 à 26 dans lequel ledit module (26) est agencé pour fournir ledit liquide par impulsions.
